# FASCICULE DE BREVET EUROPEEN

(11) **EP 1 741 608 B1**
(45) Date de publication et mention de la délivrance du brevet: **31.10.2007**
(21) Numéro de dépôt: 05300553.4
(22) Date de dépôt: 04.07.2005
(51) Int. Cl.: B60T 13/575

(54) **Amplificateur de force à deux rapports d'amplification**
Bremskraftverstärker mit zwei Verstärkungsfaktoren
Brake booster having two amplification factors

(43) Date de publication de la demande: 10.01.2007
(73) Titulaire: Delphi Technologies, Inc., Troy, MI 48007 (US)
(72) Inventeur: Trenado, Guillaume, 77090 Collegien (FR); Castel, Philippe, 75005 Paris (FR)
(74) Mandataire: Laget, Jean-Loup

(56) Documents cités:
- EP-A- 1 522 479
- FR-A- 2 857 641
- US-A- 5 012 723
- US-A- 5 493 948
- US-A- 5 699 713

## Description

La présente invention concerne un amplificateur de force à deux rapports d'amplification, pour l'aide au freinage d'urgence d'un véhicule automobile.

Les amplificateurs de force à dépression, y compris ceux qui sont équipés d'un système d'aide au freinage d'urgence (système AFU, désigné aussi par l'appellation anglaise "Panic Assist" par les hommes de l'art), sont maintenant bien connus.

Le document FR 2 857 641 décrit un amplificateur présentant une fonction d'aide au freinage d'urgence, dans lequel un organe de sortie comprend un accouplement débrayable sensible à une vitesse d'actionnement. Cet accouplement est un système élaboré comprenant de nombreuses pièces. De plus, il implique une opération de réglage lors de son installation sur l'amplificateur.

Le document EP 1 522 479 décrit un amplificateur dans lequel un couplage variable est réalisé par une capsule élastique déformable à l'intérieur de laquelle est montée un élément de réaction. En freinage d'urgence, la capsule est déformée de sorte qu'un jeu axial entre la capsule et une tige de poussée est effacé, ce qui a pour effet de modifier le rapport du couplage.

L'amplificateur décrit par ce document présente plusieurs inconvénients. Il est nécessaire de mouler l'élément de réaction à l'intérieur de la capsule. Il n'est donc pas possible de fabriquer ces deux éléments indépendamment. La forme de l'élément de réaction doit correspondre à celle de la capsule, qui est imposée par les propriétés élastiques que la capsule doit présenter pour pouvoir se déformer. Il n'est donc pas possible d'utiliser ce dispositif avec un élément de réaction de forme quelconque, par exemple un élément de réaction classique en forme de disque.

L'invention à pour but de fournir un amplificateur qui ne présente pas au moins certains des inconvénients précité de l'art antérieur.

Pour cela, l'invention fournit un amplificateur de force à deux rapports d'amplification, pour l'aide au freinage d'un véhicule automobile, comprenant :
a) un carter,
b) une membrane mobile dans le carter et séparant deux chambres dans ledit carter,
c) un piston fixé à la membrane pour se déplacer avec ladite membrane dans le carter, ledit piston ayant un alésage axial,
d) un plongeur pouvant glisser dans une direction avant et dans une direction arrière dans l'alésage axial du piston,
e) un organe d'actionnement couplé au plongeur pour déplacer celui-ci dans ladite direction avant par rapport au piston sous l'effet d'une force d'actionnement vers une position d'actionnement dans laquelle un différentiel de pression est produit entre les chambres de manière à engendrer sur ladite membrane une force motrice orientée dans ladite direction avant, et
f) un organe de sortie couplé à la fois au piston et au plongeur par l'intermédiaire d'un élément de réaction pour recevoir ladite force motrice résultant dudit différentiel de pression et de ladite force d'actionnement,
ledit élément de réaction étant en matière élastomère et ayant une face avant couplée à l'organe de sortie et une face arrière dont une première partie est couplée au piston et dont une deuxième partie est couplée au plongeur pour transmettre audit plongeur une force de réaction orientée dans ladite direction arrière en réaction à ladite force motrice vers une position de retour du plongeur dans laquelle un équilibre de pression est produit entre lesdites chambres, ledit élément de réaction ayant une surface latérale périphérique s'étendant entre ladite face avant et ladite face arrière de l'élément de réaction, ledit organe de sortie comportant une face arrière couplée audit élément de réaction au niveau d'une première zone de ladite face avant de l'élément de réaction, la surface de ladite première zone étant inférieure à la surface totale de ladite face avant dudit élément de réaction, ledit amplificateur comportant un organe de transmission présentant une partie de couplage apte à être couplée audit élément de réaction au niveau d'une deuxième zone de ladite face avant de l'élément de réaction, ledit organe de transmission étant mobile par rapport à l'organe de sortie entre d'une part une position découplée dans laquelle un jeu est ménagé entre une partie avant de l'organe de transmission et l'organe de sortie et/ou entre ladite partie de couplage de l'organe de transmission et ladite deuxième zone de la face avant de l'élément de réaction, et d'autre part une position couplée dans laquelle ledit jeu est effacé de manière que l'organe de transmission réalise un couplage entre ladite deuxième zone de la face avant de l'élément de réaction et l'organe de sortie, ledit organe de transmission comprenant une partie de réception munie d'une paroi périphérique coopérant avec la surface latérale périphérique de l'élément de réaction, ladite partie de réception étant fixée à ladite partie de couplage et agencée du côté situé dans la direction arrière par rapport à ladite partie de couplage, caractérisé en ce que ladite partie de réception et l'élément de réaction sont cylindriques de sections correspondantes, ladite partie de réception étant apte à coulisser par rapport audit élément de réaction.

Grâce à ces caractéristiques, l'organe de transmission et l'élément de réaction peuvent être fabriqués indépendamment, et facilement associés lors du montage de l'amplificateur, par exemple en faisant glisser la partie de réception autour de l'élément de réaction. L'élément de réaction peut être de forme arbitraire, par exemple en forme d'un disque. Il est donc possible d'installer un tel organe de transmission sur des amplificateurs présentant un disque de réaction classique. L'organe de transmission ne doit pas se déformer substantiellement lors du fonctionnement de l'amplificateur, notamment au niveau de sa partie de réception. Cette partie peut donc être dimensionnée et réalisée en matériau choisi pour résister à la pression interne de l'élément de réaction. Contrairement à l'art antérieur précité, il n'y a pas de contrainte de fabrication imposée par une nécessité de pouvoir déformer cette partie. De plus, l'influence de la dilatation thermique de l'élément de réaction sur le jeu est limitée car cette dilatation thermique n'implique pas nécessairement une déformation de l'organe de transmission, puisqu'ils peuvent coulisser l'un par rapport à l'autre.

De préférence, au moins une portion de la partie de réception est agencée autour du piston dans la position découplée de l'organe de transmission et est apte à coulisser par rapport au piston. Ainsi, le piston assure un guidage de l'organe de transmission.

Avantageusement, la partie de réception est guidée de manière à coulisser selon les directions avant et arrière.

De préférence, l'organe de transmission est rigide.

Selon un mode de réalisation particulier, l'amplificateur comprend un moyen de sollicitation élastique agencé de manière à solliciter l'organe de transmission vers une position arrière par rapport à l'organe de sortie, de sorte que le jeu est ménagé uniquement entre la partie avant de l'organe de transmission et l'organe de sortie dans la position découplée de l'organe de transmission.

Avantageusement, le moyen de sollicitation élastique coopère d'une part avec un élément d'appui fixe par rapport audit piston, et d'autre part avec un élément d'appui fixe par rapport audit organe de transmission.

Ainsi, les propriétés élastiques du moyen de sollicitation élastique sont indépendantes de la forme et du matériau de l'organe de transmission. Ces propriétés peuvent donc être choisies de manière optimisée, sans contrainte de fabrication imposée par l'organe de transmission. Les propriétés élastiques du moyen de sollicitation élastique permettent d'imposer le moment du passage de l'organe de transmission entre les positions découplée et couplée. On peut ainsi régler de manière fiable et durable les conditions dynamiques dans lesquelles a lieu le changement de rapport d'amplification en diminuant ou annulant sensiblement l'influence des propriétés élastiques de l'élément de réaction lui-même, qui varient fortement en fonction de l'usure et de la température, sur ces conditions dynamiques.

De préférence, ledit moyen de sollicitation élastique comprend un ressort hélicoïdal agencé entre ledit élément d'appui fixe par rapport audit piston et ledit élément d'appui fixe par rapport audit organe de transmission.

Avantageusement, ledit organe de transmission présente une collerette d'appui, ledit élément d'appui fixe par rapport audit organe de transmission comprenant ladite collerette d'appui.

De préférence, ledit piston comprend une jupe s'étendant au delà dudit élément d'appui fixe par rapport audit organe de transmission dans la direction avant, ledit élément d'appui fixe par rapport audit piston comprenant au moins une broche fixée en saillie à ladite au moins une jupe.

Avantageusement, ledit organe de sortie comprend une portion arrière cylindrique, ladite partie avant de l'organe de transmission étant guidée de manière coulissante autour de ladite portion arrière de l'organe de sortie.

De préférence, ledit organe de sortie présente un collet, ladite partie avant de l'organe de transmission coopérant avec ledit collet dans la position couplée de l'organe de transmission.

Avantageusement, le couplage entre ledit piston et ladite face arrière de l'élément de réaction est un couplage par contact direct.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 montre, de manière schématique, en coupe longitudinale, un amplificateur de force de freinage selon un mode de réalisation de l'invention, couplé à une pédale de frein d'un véhicule automobile,
- la figure 2 montre un détail de l'amplificateur de la figure 1, selon une première variante, dans le cas où aucun freinage n'est appliqué,
- la figure 3 est une vue similaire à la figure 2, selon une deuxième variante,
- la figure 4 est une vue similaire à la figure 3, dans le cas où un freinage normale est appliqué,
- la figure 5 est une vue similaire à la figure 3, dans le cas où un freinage d'urgence est appliqué, et
- la figure 6 est une vue similaire à la figure 3, dans le cas où un freinage normal à double rapport est appliqué.

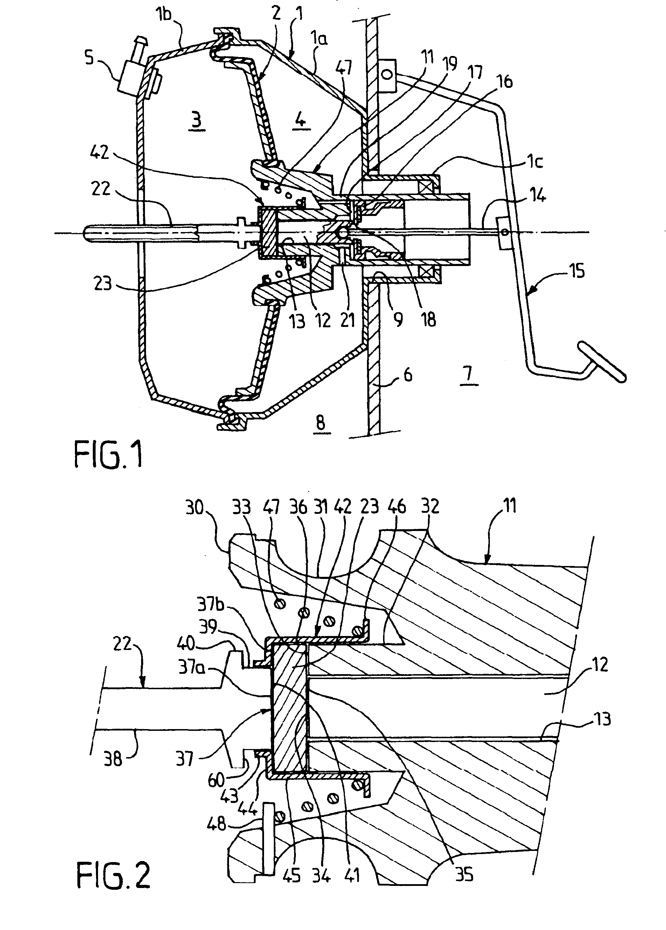

Dans le cadre de cette description, on désigne par « avant » et « arrière » respectivement la gauche et la droite de la figure 1. Bien entendu l'invention ne se limite pas à un amplificateur de force destiné à être monté dans un véhicule automobile avec les éléments représentés à gauche, respectivement à droite, de la figure 1, agencés vers l'avant, respectivement vers l'arrière du véhicule. En d'autres termes, les directions « avant » et « arrière » peuvent coïncider, mais ne coïncident pas nécessairement, avec ce qu'on appelle couramment l'avant et l'arrière du véhicule.

L'amplificateur de force représenté sur la figure 1 comprend un carter 1, qui est composé de deux parties 1a et 1b, respectivement arrière et avant, qui sont assemblées l'une à l'autre par poinçonnage. Une membrane 2 divise le volume intérieur du carter 1 en une chambre avant 3 reliée à une source de pression relativement basse (usuellement une pression inférieure à la pression atmosphérique fournie par le circuit d'admission d'air du moteur) et en une chambre arrière ou chambre de travail 4 pouvant être reliée sélectivement à une source de pression relativement haute (usuellement la pression atmosphérique). La partie avant 1b du carter 1 est munie d'un raccord 5 par lequel la chambre 3 peut être reliée, via un tuyau approprié non montré, à une source de dépression. La partie arrière 1a du carter 1 est usuellement fixée, par des moyens non montrés, à une cloison 6 séparant l'habitacle 7 d'un véhicule par rapport au compartiment moteur 8 dudit véhicule. La partie arrière 1a du carter 1 comporte une partie cylindrique 1c qui passe à travers une ouverture 9 de la cloison 6 et qui débouche dans l'habitacle 7.

Dans le carter 1 se trouve un piston 11 (piston primaire appelé aussi corps de valve), qui est attaché à la membrane 2 et qui est mobile axialement avec elle dans le carter 1 et dans la partie cylindrique 1c de la partie arrière 1a. Un plongeur 12 peut coulisser dans un alésage axial 13 du piston 11 et peut être déplacé dans ledit alésage, sous la commande d'un organe d'entrée de force ou organe d'actionnement 14, depuis la position stable de repos montrée dans la figure 2, jusqu'à une position instable de travail, vers la gauche dans la figure 2, c'est-à-dire vers 1a partie avant 1b du carter 1. L'organe d'actionnement 14 peut être constitué par une tige de commande reliée à la pédale de frein 15 du véhicule.

L'amplificateur de force comporte en outre un clapet 16 apte à coopérer avec des sièges 17 et 18 prévus respectivement sur le piston 11 et sur le plongeur 12. Quand le plongeur 12 est dans la position de repos (figure 2), c'est-à-dire quand la pédale de frein 15 n'est pas enfoncée, le clapet 16 est en appui sur les deux sièges 17 et 18 et les deux chambres 3 et 4 du carter sont isolées l'une de l'autre. Quand le moteur du véhicule tourne, le plongeur 12 étant toujours dans la position de repos (pédale de frein 15 non enfoncée), une dépression règne dans la chambre 3 du carter 1 et provoque un léger déplacement du piston 11 vers l'avant, contre l'action d'un ressort non montré. Il en résulte que le siège 17 s'écarte légèrement du clapet 16 et une communication est établie entre les deux chambres 3 et 4 du carter 1 à travers des passages 19 et 21 formés dans le piston 11. Quand la pédale de frein 15 est enfoncée, la tige de commande pousse le plongeur 12 vers l'avant dans l'alésage 13 du piston 11. Dans ces conditions, le clapet 16 qui est aussi poussé vers l'avant par un ressort non montré prenant axialement appui contre un épaulement de la tige de commande 14, vient tout d'abord en contact avec le siège 17 pour couper la communication entre les chambres 3 et 4 du carter 1. Ensuite, pendant que le plongeur 12 poursuit son chemin vers l'avant dans l'alésage 13 sous la poussée de la tige de commande 14, le clapet 16 s'écarte du siège 18, établissant ainsi, via le passage 21, une communication entre la chambre 4 du carter 1 et l'habitacle 7 où règne la pression atmosphérique. Du fait de la différence de pression existant maintenant entre les chambres 3 et 4 du carter 1, la membrane 2 et le piston 11 sont déplacés vers l'avant, c'est-à-dire vers la gauche dans la figure 2.

L'amplificateur de force comporte en outre un organe de sortie 22, encore appelé tige de réaction, dont l'extrémité avant est usuellement couplée, en service, au piston d'un maître-cylindre (non montré) faisant partie du système de freinage du véhicule. En fonctionnement, lorsque la pédale de frein 15 est enfoncée et que le piston 11 est déplacé vers l'avant comme indiqué plus haut sous l'action du différentiel de pression entre les deux chambres 3 et 4, le piston 11 et le plongeur 12 agissent ensemble sur l'organe de sortie 22 par l'intermédiaire d'un disque de réaction 23 en matière élastomère, afin de pousser l'organe de sortie 22 vers l'avant, c'est-à-dire vers la gauche dans la figure 2. Il en résulte que l'organe de sortie 22 transmet une force de sortie au piston du maître-cylindre qui va alors engendrer, au niveau des freins du véhicule, une pression de freinage proportionnée à la force de sortie de l'amplificateur de force. En freinage normal, le rapport d'amplification de l'amplificateur de force est déterminé approximativement par le rapport entre, d'une part, l'aire totale de contact du disque de réaction 23 avec les faces frontales du piston 11 et du plongeur 12 et, d'autre part, l'aire de contact entre la face arrière de l'organe de sortie 22 et le disque de réaction 23.

L'amplificateur de force représenté sur la figure 1 comporte un système d'aide au freinage d'urgence, qui réagit à la vitesse d'actionnement de la pédale de frein 15, pour accroître fortement le rapport d'amplification de l'amplificateur de force lorsqu'une situation de freinage d'urgence est détectée. Usuellement, il est admis que l'on se trouve dans une situation de freinage d'urgence si, au tout début de l'actionnement de la pédale de frein, la tige de commande 14 et le plongeur 12 sont actionnés très rapidement, c'est-à-dire à une vitesse supérieure à une valeur de seuil VS prédéfinie en principe plus grande que 100 mm/s, ou, ce qui est équivalent, si le plongeur 12 effectue une course plus grande qu'une valeur prédéterminée, en principe plus grande que 1 mm, par rapport au piston 11. Dans les deux cas, cela signifie que même si le clapet d'air 16, 18 est complètement ouvert tout au début de l'actionnement de la pédale de frein 15, ledit clapet d'air n'est pas encore capable d'alimenter suffisamment rapidement en air atmosphérique la chambre arrière 4 de l'amplificateur de force pour produire la force de freinage désirée par le conducteur.

Concrètement, la valeur de seuil VS peut être égale par exemple à 500 mm/s. L'amplificateur de force peut avoir un rapport d'amplification d'une première valeur Q1 égale, par exemple, à environ 5 quand la vitesse d'actionnement de la tige de commande 14 et du plongeur 12 est inférieure VS, et d'une seconde valeur Q2 égale, par exemple, à environ 14 quand ladite vitesse d'actionnement est supérieure à VS.

Pour fonctionner correctement, sans restriction, le clapet d'air 16, 18 doit être suffisamment ouvert, c'est-à-dire que le plongeur 12 doit être déplacé vers l'avant (vers la gauche dans la figure 1) d'une quantité suffisante par rapport au piston 11, cette quantité variant usuellement entre environ 0,5 et environ 0,8 mm selon les modèles et les fabricants d'amplificateurs de force. C'est pourquoi il est en général convenu de parler de "mode freinage d'urgence" pour une course du plongeur plus grande que 1 mm, par exemple 1,5 ± 0,4 mm (les ± 0,4 mm sont pour tenir compte des tolérances de fabrication et de montage). Ainsi, si le plongeur 12 avance de plus de 1,5 ± 0,4 mm par rapport au piston 12, le mode freinage d'urgence sera déclenché.

En référence à la figure 2, le piston 11 comprend une jupe externe 30 circulaire, à laquelle est fixée la membrane 2 au niveau d'une encoche de réception 31 circulaire. A l'intérieur de la jupe externe 30, le piston 11 présente une jupe interne 32, cylindrique circulaire, qui présente une face frontale 33 annulaire. L'alésage 13 traverse la jupe 32. Le plongeur 12 présente une face frontale 34.

Le disque de réaction 23 est de forme cylindrique circulaire. Il présente une face arrière 35, une face latérale 36, et une face avant 37. Il est agencé au niveau des extrémités avant de la jupe 32 et du plongeur 12, de sorte que la face arrière 35 peut coopérer avec les faces frontales 33 et 34.

L'organe de sortie 22 présente une portion avant 38, cylindrique circulaire, destinée à coopérer avec le piston d'un maître-cylindre hydraulique au niveau de son extrémité avant, et une portion arrière 39, également cylindrique circulaire et de diamètre supérieur au diamètre de la portion 38. La portion arrière 39 présente une face arrière 41 qui peut coopérer avec une portion centrale 37a circulaire de la face avant 37 du disque de réaction 23. Au niveau de la jonction entre les portions 38 et 39, l'organe de sortie comprend un collet 40 qui fait saillie radialement par rapport à la portion arrière 39 de manière à présenter une surface d'épaulement 60 tournée vers l'arrière.

L'amplificateur de force comprend une chemise 42, comprenant une portion avant 43 cylindrique, qui entoure la portion arrière 39 de l'organe de sortie 22 et peut coulisser vers l'avant et vers l'arrière autour de la portion 39. La chemise 42 comprend également une portion de couplage 44 de forme annulaire, qui fait saillie radialement à partir de la portion avant 43 et peut coopérer avec une portion périphérique annulaire 37b de la face avant 37 du disque de réaction 23. La chemise 42 présente une portion de réception 45, de diamètre correspondant à celui du disque de réaction 23 et de la jupe interne 32, qui entoure le disque de réaction 23 et de la jupe interne 32 et peut coulisser par rapport à eux. La portion de réception 45 est reliée à la portion de couplage 44 au niveau de la périphérie extérieure de la portion de couplage 44. Enfin, à l'extrémité arrière de la portion de réception 45, la chemise 42 présente une collerette 46 qui fait saillie radialement. La chemise 42 est par exemple réalisée par emboutissage d'une tôle d'acier de 1 mm d'épaisseur.

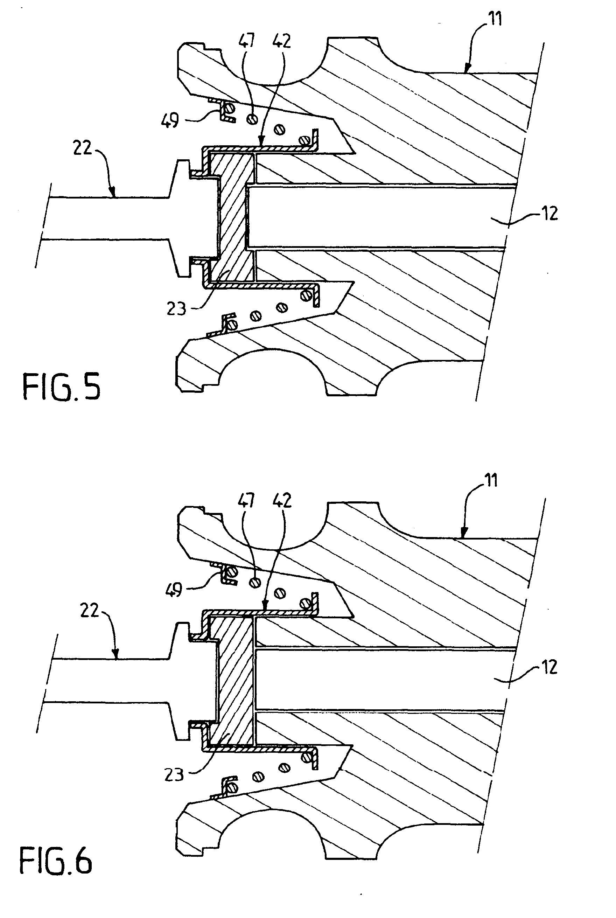

La chemise 42 peut coulisser autour de la jupe 32, du disque de réaction 23 et de la portion arrière 39 de l'organe de sortie, entre une position arrière, représentée sur les figures 2 à 4, et une position avant, représentée sur les figures 5 et 6. Dans la position arrière, un jeu est ménagé entre la surface 60 du collet 40 et la partie avant 43 de la chemise 42. Le couplage entre l'organe de sortie 22 et le disque de réaction 23 est réalisé par le contact entre la face arrière 41 de l'organe de sortie 22 et la portion centrale 37a de la face avant 37 du disque de réaction 23. Ce couplage correspond au rapport d'amplification Q1. Dans la position avant, le jeu est effacé et la partie avant 43 est en butée contre la surface 60 du collet 40. La chemise 42 réalise en couplage supplémentaire entre le disque de réaction et l'organe de sortie 22, en transmettant à l'organe de sortie 22, par l'intermédiaire de sa portion avant 43, la pression de contact entre sa portion de couplage 44 et la portion périphérique 37b de la face avant 37 du disque de réaction 23. Ce couplage supplémentaire conduit au rapport d'amplification Q2.

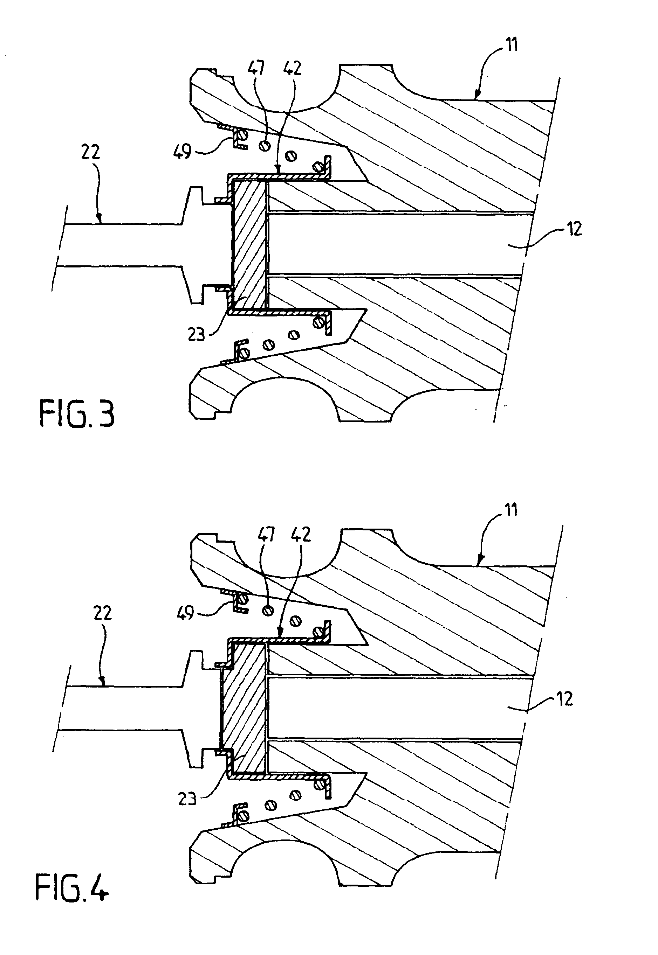

Un ressort hélicoïdal 47 est agencé de manière à solliciter la chemise 42 dans la position arrière. Le ressort 47 prend appui d'une part sur la collerette 46, et d'autre par sur un élément d'appui fixé au piston 11. Dans la variante représentée sur la figure 2, cet élément d'appui comprend un ensemble de broches 48 fixées au piston 11 par emmanchement dans des alésages ménagés dans la jupe externe 30, de manière à faire saillie vers l'intérieure de la jupe 30. Les broches 48 sont agencées vers l'avant par rapport à la collerette 46. Dans la variante représentée sur la figure 3, cet élément d'appui comprend une pièce dentée 49 métallique, de forme globalement annulaire. La pièce 49 présente des dents permettant la fixation de la pièce 49 à la surface intérieure de la jupe externe 30, par accrochage. Cette variante présente l'avantage de ne pas nécessiter de prévoir des alésages dans la jupe 30. Ainsi, il est possible d'utiliser un piston classique de type connu par exemple fait en matière plastique. L'autre variante présente l'avantage que la fixation des broches 49 est plus fiable qu'une fixation par accrochage de dents.

On va maintenant expliquer le fonctionnement de l'amplificateur de force.

Quand la pédale de frein 15 n'est pas actionnée et qu'aucun freinage n'est appliqué, le disque de réaction présente la forme cylindrique circulaire décrite ci-dessus, et la chemise 42 est positionnée dans sa position arrière par le ressort 47, comme représenté sur les figures 2 et 3.

Quand on actionne la pédale de frein 15 pour réaliser un freinage normal, c'est-à-dire de manière à déplacer le plongeur 12 vers l'avant avec une vitesse inférieure à VS, le piston 11 se déplace également vers l'avant sous l'effet de la dépression, de sorte que le déplacement relatif du plongeur 12 par rapport au piston reste inférieur à un certain seuil, par exemple 1 mm, comme expliqué ci-dessus, et s'annule à l'état stationnaire. La figure 4 représente la situation dans le cas d'un freinage normal stationnaire. L'avancée du piston 11 et du plongeur 12 a pour effet d'augmenter la pression interne du disque de réaction 11, car celui-ci est confiné latéralement par la portion de réception 45 de la chemise 42 et vers l'avant par la portion de couplage 44 de la chemise et la face arrière 41 de l'organe de sortie 22. Cette pression interne est suffisante pour déformer élastiquement le disque de réaction 23 de manière à « extruder » de la matière au niveau de la portion centrale 37a de sa face avant 37, ce qui a pour effet de transmettre le déplacement du piston 11 et du plongeur 12 à l'organe de sortie 22. Cette pression interne est dans ce cas insuffisante pour déplacer la chemise 42 à l'encontre de la sollicitation du ressort 47. Ainsi, la chemise 42 reste dans sa position arrière et le rapport d'amplification Q1 est déterminé en fonction de l'aire de la portion centrale 37a par rapport à l'aire des faces frontales 33 et 34.

Quand on actionne brusquement la pédale de frein 15 pour réaliser un freinage d'urgence, c'est-à-dire de manière à déplacer le plongeur 12 vers l'avant avec une vitesse supérieure à VS, le piston 11 ne se déplace pas suffisamment vite vers l'avant car la pression dans la chambre 4 ne varie pas instantanément, de sorte que le déplacement relatif du plongeur 12 par rapport au piston 11 devient supérieur à par exemple 1 mm, comme expliqué ci-dessus. La figure 5 représente la situation dans le cas d'un freinage d'urgence. Comme précédemment décrit, la pression interne du disque de réaction 23 augmente. Dans ce cas cependant, en raison de l'avancée plus importante du plongeur 12 qui s'enfonce dans le disque de réaction 23, la pression interne devient suffisante pour que la force résultant de la pression exercée par le disque de réaction 23 sur la chemise 42 au niveau de la portion 37b déplace la chemise 42 à l'encontre de la sollicitation du ressort 47. La chemise 42 se retrouve donc dans sa position avant et le disque de réaction 37 est déformé élastiquement de sorte que de la matière est « extrudée » au niveau de la portion 37b et en regard de la face frontale 33, comme représenté sur la figure 5. Dans ce cas, un couplage supplémentaire entre l'organe de sortie 22 et le disque de réaction 23 est réalisé par la chemise 42 et l'amplificateur de force atteint un rapport d'amplification Q2 qui est déterminé en fonction de l'aire totale de la face avant 37, c'est-à-dire de l'aire de la portion centrale 37a et de la portion périphérique 37b, par rapport à l'aire des faces frontales 33 et 34. La pression interne seuil, au dessus de laquelle la chemise 42 passe dans sa position avant, peut être choisie en choisissant un ressort 47 de raideur correspondante.

Dans un cas particulier, l'amplificateur de force présente également le rapport d'amplification Q2, bien qu'on soit en freinage normal. Par convention, on parle de freinage normal à rapport double, bien que Q2 ne soit pas nécessairement égal à deux fois Q1. Le freinage normal à rapport double est obtenu en actionnant la pédale de frein 15 en freinage normal, c'est-à-dire de manière à déplacer le plongeur 12 vers l'avant avec une vitesse inférieure à VS, mais avec un force supérieure à un seuil donnée. Ceci peut être obtenu par exemple en accroissant lentement la force d'entrée exercée sur la pédale de frein à partir de l'état de freinage représenté sur la figure 4, qui est un freinage normal à rapport simple. Dans ce cas, la pression interne du disque de réaction 23 augmente suffisamment pour déplacer la chemise 42 à l'encontre de la sollicitation du ressort 42, dans sa position avant. Le disque de réaction 23 est déformé élastiquement de sorte que de la matière est « extrudée » au niveau de la portion 37b, comme représenté sur la figure 6.

Un amplificateur de force selon l'invention peut présenter des différences par rapport à l'amplificateur décrit ci-dessus.

Plusieurs éléments ont été décrit ci-dessus de forme cylindrique circulaire, notamment le disque de réaction 23, la jupe interne 32 et la portion de réception 45. Alternativement, ces éléments pourraient présenter des formes cylindriques non circulaire correspondantes.

L'amplificateur de force pourrait fonctionner sans le ressort 47. Dans ce cas, dans sa position découplée correspondant à un freinage normal, la chemise 42 est positionnée de manière flottante. Le jeu est réparti entre d'une part le collet 40 et la portion avant 43 de la chemise 42 et d'autre part la portion 44 de la chemise 42 et la portion périphérique 37b de la face avant 37 du disque de réaction 23. Le seuil de pression interne au dessus duquel le disque de réaction 23 se déforme élastiquement de manière à déplacer la chemise 42 dans sa position avant est fonction des propriétés élastiques du disque de réaction 23.

L'invention est applicable à un amplificateur de force du type tandem. Un amplificateur de force selon l'invention pourrait être conçu pour présenter plus de deux rapports d'amplification, par exemple en prévoyant plusieurs organes de transmission découplables coopérant avec des portions respectives du disque de réaction.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Amplificateur de force à deux rapports d'amplification, pour l'aide au freinage d'un véhicule automobile, comprenant :
a) un carter (1),
b) une membrane (2) mobile dans le carter et séparant deux chambres (3, 4) dans ledit carter,
c) un piston (11) fixé à la membrane pour se déplacer avec ladite membrane dans le carter, ledit piston ayant un alésage axial (13),
d) un plongeur (12) pouvant glisser dans une direction avant et dans une direction arrière dans l'alésage axial du piston,
e) un organe d'actionnement (14) couplé au plongeur pour déplacer celui-ci dans ladite direction avant par rapport au piston sous l'effet d'une force d'actionnement vers une position d'actionnement dans laquelle un différentiel de pression est produit entre les chambres de manière à engendrer sur ladite membrane une force motrice orientée dans ladite direction avant, et
f) un organe de sortie (22) couplé à la fois au piston et au plongeur par l'intermédiaire d'un élément de réaction (23) pour recevoir ladite force motrice résultant dudit différentiel de pression et de ladite force d'actionnement,
ledit élément de réaction étant en matière élastomère et ayant une face avant (37) couplée à l'organe de sortie et une face arrière (35) dont une première partie est couplée au piston et dont une deuxième partie est couplée au plongeur pour transmettre audit plongeur une force de réaction orientée dans ladite direction arrière en réaction à ladite force motrice vers une position de retour du plongeur dans laquelle un équilibre de pression est produit entre lesdites chambres, ledit élément de réaction ayant une surface latérale périphérique (36) s'étendant entre ladite face avant et ladite face arrière de l'élément de réaction, ledit organe de sortie comportant une face arrière (41) couplée audit élément de réaction au niveau d'une première zone (37a) de ladite face avant de l'élément de réaction, la surface de ladite première zone étant inférieure à la surface totale de ladite face avant dudit élément de réaction, ledit amplificateur comportant un organe de transmission (42) présentant une partie de couplage (44) apte à être couplée audit élément de réaction au niveau d'une deuxième zone (37b) de ladite face avant de l'élément de réaction, ledit organe de transmission étant mobile par rapport à l'organe de sortie (22) entre d'une part une position découplée dans laquelle un jeu est ménagé entre une partie avant (43) de l'organe de transmission et l'organe de sortie et/ou entre ladite partie de couplage de l'organe de transmission et ladite deuxième zone de la face avant de l'élément de réaction, et d'autre part une position couplée dans laquelle ledit jeu est effacé de manière que l'organe de transmission (42) réalise un couplage entre ladite deuxième zone de la face avant de l'élément de réaction et l'organe de sortie, ledit organe de transmission comprenant une partie de réception (45) munie d'une paroi périphérique coopérant avec la surface latérale périphérique (36) de l'élément de réaction, ladite partie de réception étant fixée à ladite partie de couplage (44) et agencée du côté situé dans la direction arrière par rapport à ladite partie de couplage, **caractérisé en ce que** ladite partie de réception et l'élément de réaction sont cylindriques de sections correspondantes, ladite partie de réception étant apte à coulisser par rapport audit élément de réaction.

2. Amplificateur selon la revendication 1, **caractérisé par le fait qu**'au moins une portion de ladite partie de réception est agencée autour dudit piston dans la position découplée de l'organe de transmission et est apte à coulisser par rapport audit piston.

3. Amplificateur selon la revendication 1 ou la revendication 2, **caractérisé par le fait que** ladite partie de réception est guidée de manière à coulisser selon lesdites directions avant et arrière.

4. Amplificateur selon l'une des revendications 1 à 3, **caractérisé par le fait que** ledit organe de transmission est rigide.

5. Amplificateur selon l'une des revendications 1 à 4, **caractérisé par le fait qu**'il comprend un moyen de sollicitation élastique (47) agencé de manière à solliciter ledit organe de transmission (42) vers une position arrière par rapport à l'organe de sortie, de sorte que ledit jeu est ménagé uniquement entre ladite partie avant (43) de l'organe de transmission et l'organe de sortie dans ladite position découplée de l'organe de transmission.

6. Amplificateur selon la revendication 5, **caractérisé par le fait que** ledit moyen de sollicitation élastique coopère d'une part avec un élément d'appui (48, 49) fixe par rapport audit piston, et d'autre part avec un élément d'appui (46) fixe par rapport audit organe de transmission.

7. Amplificateur selon la revendication 6, **caractérisé par le fait que** ledit moyen de sollicitation élastique comprend un ressort hélicoïdal agencé entre ledit élément d'appui fixe par rapport audit piston et ledit élément d'appui fixe par rapport audit organe de transmission.

8. Amplificateur selon la revendication 6 ou la revendication 7, **caractérisé par le fait que** ledit organe de transmission (42) présente une collerette d'appui (46), ledit élément d'appui fixe par rapport audit organe de transmission comprenant ladite collerette d'appui.

9. Amplificateur selon l'une des revendications 6 à 8, **caractérisé par le fait que** ledit piston comprend une jupe (30) s'étendant au delà dudit élément d'appui fixe (46) par rapport audit organe de transmission dans la direction avant, ledit élément d'appui fixe par rapport audit piston comprenant au moins une broche (48) fixée en saillie à ladite au moins une jupe.

10. Amplificateur selon l'une des revendications 1 à 9, **caractérisé par le fait que** ledit organe de sortie comprend une portion arrière cylindrique (39), ladite partie avant (43) de l'organe de transmission étant guidée de manière coulissante autour de ladite portion arrière de l'organe de sortie.

11. Amplificateur selon la revendication 10, **caractérisé par le fait que** ledit organe de sortie présente un collet (40), ladite partie avant de l'organe de transmission coopérant avec ledit collet dans la position couplée de l'organe de transmission.

12. Amplificateur selon l'une des revendications 1 à 11, **caractérisé par le fait que** le couplage entre ledit piston et ladite face arrière (35) de l'élément de réaction est un couplage par contact direct.

## Claims

1. Force booster with two boost ratios for assisting motor vehicle braking, comprising:
a) a housing (1),
b) a diaphragm (2) moving in the housing and separating two chambers (3, 4) in the said housing,
c) a piston (11) fixed to the diaphragm so that it can move together with the said diaphragm in the housing, the said piston having an axial bore (13),
d) a plunger (12) which can slide in a forward direction and in a rearward direction in the axial bore of the piston,
e) an actuating member (14) coupled to the plunger for moving the latter in the said forward direction with respect to the piston under the effect of an actuating force towards an actuating position in which a pressure differential is produced between the chambers so as to generate on the said diaphragm a driving force oriented in the said forward direction, and
f) an output member (22) coupled both to the piston and to the plunger via a reaction element (23) for receiving the said driving force resulting from the said pressure differential and from the said actuating force,
the said reaction element being made of elastomeric material and having a front face (37) coupled to the output member and a rear face (35) of which a first part is coupled to the piston and of which a second part is coupled to the plunger in order to transmit to the said plunger a reaction force oriented in the said rearward direction in reaction to the said driving force towards a plunger return position in which a pressure equilibrium is produced between the said chambers, the said reaction element having a peripheral lateral surface (36) extending between the said front face and the said rear face of the reaction element, the said output member including a rear face (41) coupled to the said reaction element in a first region (37a) of the said front face of the reaction element, the area of the said first region being less than the total area of the said front face of the said reaction element, the said booster including a transmission member (42) having a coupling part (44) designed to be coupled to the said reaction element in a second region (37b) of the said front face of the reaction element, the said transmission member being able to move with respect to the output member (22) between, on the one hand, an uncoupled position in which a clearance is formed between a front part (43) of the transmission member and the output member and/or between the said coupling part of the transmission member and the said second region of the front face of the reaction element, and, on the other hand, a coupled position in which the said clearance is eliminated in such a way that the transmission member (42) produces a coupling between the said second region of the front face of the reaction element and the output member, the said transmission member comprising a reception part (45) provided with a peripheral wall cooperating with the peripheral lateral surface (36) of the reaction element, the said reception part being fixed to the said coupling part (44) and arranged on that side situated in the rearward direction with respect to the said coupling part, **characterized in that** the said reception part and the reaction element are cylindrical with corresponding cross sections, the said reception part being able to slide with respect to the said reaction element.

2. Booster according to Claim 1, **characterized in that** at least one portion of the said reception part is arranged around the said piston in the uncoupled position of the transmission member and is able to slide with respect to the said piston.

3. Booster according to Claim 1 or Claim 2, **characterized in that** the said reception part is guided so that it can slide in the said forward and rearward directions.

4. Booster according to one of Claims 1 to 3, **characterized in that** the said transmission member is rigid.

5. Booster according to one of Claims 1 to 4, **characterized in that** it comprises an elastic loading means (47) arranged so as to urge the said transmission member (42) towards a rear position with respect to the output member, such that the said clearance is formed only between the said front part (43) of the transmission member and the output member in the said uncoupled position of the transmission member.

6. Booster according to Claim 5, **characterized in that** the said elastic loading means cooperates, on the one hand, with a bearing element (48, 49) fixed with respect to the said piston, and, on the other hand, with a bearing element (46) fixed with respect to the said transmission member.

7. Booster according to Claim 6, **characterized in that** the said elastic loading means comprises a helical spring arranged between the said bearing element fixed with respect to the said piston and the said bearing element fixed with respect to the said transmission member.

8. Booster according to Claim 6 or Claim 7, **characterized in that** the said transmission member (42) has a bearing flange (46), the said bearing element fixed with respect to the said transmission member comprising the said bearing flange.

9. Booster according to one of Claims 6 to 8, **characterized in that** the said piston comprises a skirt (30) extending beyond the said bearing element (46) fixed with respect to the said transmission member in the forward direction, the said bearing element fixed with respect to the said piston comprising at least one fixed pin (48) projecting from the said at least one skirt.

10. Booster according to one of Claims 1 to 9, **characterized in that** the said output member comprises a cylindrical rear portion (39), the said front part (43) of the transmission member being guided in a sliding manner around the said rear portion of the output member.

11. Booster according to Claim 10, **characterized in that** the said output member has a collar (40), the said front part of the transmission member cooperating with the said collar in the coupled position of the transmission member.

12. Booster according to one of Claims 1 to 11, **characterized in that** the coupling between the said piston and the said rear face (35) of the reaction element is a direct-contact coupling.

## Patentansprüche

1. Kraftverstärker mit zwei Verstärkungsfaktoren zur Bremsunterstützung eines Kraftfahrzeugs mit:
a) einem Gehäuse (1),
b) einer Membran (2), die in dem Gehäuse beweglich ist und zwei Kammern (3,4) in dem Gehäuse voneinander trennt,
c) einem an der Membran befestigten Kolben (11), der mit der Membran in dem Gehäuse beweglich ist, wobei der Kolben eine Axialbohrung (13) aufweist,
d) einem Plunger (12), der in eine Vorwärts- und eine Rückwärtsrichtung in der Axialbohrung des Kolbens verschiebbar ist,
e) einem Betätigungsmittel (14), das mit dem Plunger gekoppelt ist, um diesen in Vorwärtsrichtung bezüglich des Kolbens unter der Einwirkung einer Betätigungskraft in eine Betätigungsposition zu bewegen, in welcher ein Druckunterschied zwischen den Kammern derart erzeugt wird, dass auf die Membran eine in die Vorwärtsrichtung gerichtete Antriebskraft ausgeübt wird, und
f) ein Austrittselement (22), das mittels eines Reaktionselementes (23) gleichzeitig mit dem Kolben und dem Plunger gekoppelt ist, um die aus dem Druckunterschied resultierende Antriebskraft und die Betätigungskraft aufzunehmen,
wobei das Reaktionselement aus einem elastomeren Material besteht und eine Vorderseite (37), die mit dem Austrittselement gekoppelt ist, und eine Rückseite (35) aufweist, von der ein erster Bereich mit dem Kolben und ein zweiter Bereich mit dem Plunger gekoppelt ist, um auf den Plunger als Reaktion auf die Antriebskraft eine in die Rückwärtsrichtung orientierte Gegenkraft in Richtung auf eine Rückstellposition des Plungers zu übertragen, in welcher ein Druckgleichgewicht zwischen den Kammern herrscht, wobei das Reaktionselement eine seitliche Umfangsfläche (36) aufweist, die sich zwischen der Vorderseite und der Rückseite des Reaktionselementes erstreckt, wobei das Austrittselement eine Rückseite (41) aufweist, die auf Höhe eines ersten Bereichs (37a) der Vorderseite des Reaktionselements mit dem Reaktionselement gekoppelt ist, wobei die Fläche des ersten Bereichs kleiner als die Gesamtfläche der Vorderseite des Reaktionselementes ist, wobei der Verstärker ein Übertragungsmittel (42) aufweist, das ein Kupplungsteil (44) besitzt, welches mit dem Reaktionselement auf Höhe eines zweiten Bereichs (37b) der Vorderseite des Reaktionselementes gekoppelt werden kann, wobei das Übertragungsmittel bezüglich des Austrittselements (22) beweglich ist, zwischen einerseits einer entkoppelten Position, in welcher ein Spiel zwischen einem vorderen Teil (43) des Übertragungsmittels und dem Austrittselement und/oder zwischen dem Kupplungsteil des Übertragungsmittels und dem zweiten Bereich der Vorderseite des Reaktionselementes ausgespart ist, und andererseits einer gekoppelten Position, in welcher das Spiel derart beseitigt ist, dass das Übertragungsmittel (42) eine Kopplung zwischen dem zweiten Bereich der Vorderseite des Reaktionselementes und dem Austrittselement herstellt, wobei das Übertragungsmittel ein Aufnahmeteil (45) umfasst, das mit einer Umfangswand versehen ist, die mit der seitlichen Umfangsfläche (36) des Reaktionselementes zusammenwirkt, wobei das Aufnahmeteil an dem Kupplungsteil (44) befestigt und auf der Seite angeordnet ist, die sich bezüglich des Kupplungsteils auf der Rückwärtsrichtung befindet, **dadurch gekennzeichnet, dass** das Aufnahmeteil und das Reaktionselement zylindrisch sind und entsprechende Querschnitte aufweisen, wobei das Aufnahmeteil bezüglich des Reaktionselementes verschiebbar ist.

2. Verstärker gemäß Anspruch 1, **dadurch gekennzeichnet, dass** wenigstens ein Abschnitt des Aufnahmeteils in der entkoppelten Position des Übertragungsmittels um den Kolben herum angeordnet und bezüglich des Kolbens verschiebbar ist.

3. Verstärker gemäß Anspruch 1 oder Anspruch 2, **dadurch gekennzeichnet, dass** das Aufnahmeteil so geführt ist, dass es in die Vorwärts- und Rückwärtsrichtungen verschiebbar ist.

4. Verstärker gemäß einem der Ansprüche 1 bis 3, **dadurch gekennzeichnet, dass** das Übertragungsmittel starr ist.

5. Verstärker gemäß einem der Ansprüche 1 bis 4, **dadurch gekennzeichnet, dass** er ein elastisches Stellmittel (47) umfasst, das so angeordnet ist, dass das Übertragungsmittel (42) in Richtung einer bezüglich des Austrittselements rückwärtigen Position vorgespannt wird, so dass das Spiel lediglich zwischen dem vorderen Teil (43) des Übertragungsmittels und dem Austrittselement in der entkoppelten Position des Übertragungsmittels vorhanden ist.

6. Verstärker gemäß Anspruch 5, **dadurch gekennzeichnet, dass** das elastische Stellmittel einerseits mit einem bezüglich des Kolbens fixierten Auflageelement (48, 49) und andererseits mit einem bezüglich des Übertragungsmittels fixierten Auflageelement (46) zusammenwirkt.

7. Verstärker gemäß Anspruch 6, **dadurch gekennzeichnet, dass** das elastische Stellmittel eine Spiralfeder umfasst, die zwischen dem bezüglich dem Kolben fixierten Auflageelement und dem bezüglich dem Übertragungsmittel fixierten Auflageelement angeordnet ist.

8. Verstärker gemäß Anspruch 6 oder Anspruch 7, **dadurch gekennzeichnet, dass** das Übertragungsmittel (42) einen Auflagekragen (46) aufweist, wobei das bezüglich dem Übertragungsmittel fixierte Auflageelement den Auflagekragen umfasst.

9. Verstärker gemäß einem der Ansprüche 6 bis 8, **dadurch gekennzeichnet, dass** der Kolben eine Schürze (30) umfasst, welche sich über das bezüglich des Übertragungsmittels fixierte Auflageelement (46) in die Vorwärtsrichtung hinaus erstreckt, wobei das bezüglich des Kolbens fixierte Auflageelement wenigstens einen über die wenigstens eine Schürze hinausragenden fixierten Dorn (48) umfasst.

10. Verstärker gemäß einem der Ansprüche 1 bis 9, **dadurch gekennzeichnet, dass** das Austrittselement einen hinteren zylindrischen Abschnitt (39) aufweist, wobei das vordere Teil (43) des Übertragungsmittels verschiebbar um den hinteren Abschnitt des Austrittselements geführt ist.

11. Verstärker gemäß Anspruch 10, **dadurch gekennzeichnet, dass** das Austrittselement einen Kragen (40) aufweist, wobei der vordere Teil des Übertragungsmittels in der gekoppelten Position des Übertragungsmittels mit dem Kragen zusammenwirkt.

12. Verstärker gemäß einem der Ansprüche 1 bis 11, **dadurch gekennzeichnet, dass** die Kupplung zwischen dem Kolben und der Rückseite (35) des Reaktionselementes eine Kupplung mit direktem Kontakt ist.
